# EUROPÄISCHE PATENTSCHRIFT

(11) **EP 2 192 150 B1**
(45) Veröffentlichungstag und Bekanntmachung des Hinweises auf die Patenterteilung: **12.10.2011**
(21) Anmeldenummer: 08170031.2
(22) Anmeldetag: 26.11.2008
(51) Int. Cl.: C08J 11/04, C08G 63/00, B29B 17/00

(54) **Polyester-mit-Ätzmaterial-Mischverfahren und -Mischreaktoren**
Polyester with etching material mixing method and mixing reactor
Procédé et réacteurs de mélange de polyester et de matériau à graver

(43) Veröffentlichungstag der Anmeldung: 02.06.2010
(73) Patentinhaber: Veolia Umweltservice Beteiligungsverwaltungs GmbH, 20097 Hamburg (DE)
(72) Erfinder: Schmidt, Ulrich, 22962, Siek (DE)
(74) Vertreter: Meier, Frank

(56) Entgegenhaltungen:
- EP-A- 1 214 970
- WO-A-02/102884
- WO-A-03/020483
- DE-A1- 10 032 899
- DATABASE WPI Week 199208 Thomson Scientific, London, GB; AN 1992-062948 XP002527438 & SU 1 650 662 A (AS USSR CHEM PHYS) 23. Mai 1991 (1991-05-23)
- DATABASE WPI Week 200651 Thomson Scientific, London, GB; AN 2006-498621 XP002527439 & KR 2005 074 666 A (KIM K J) 19. Juli 2005 (2005-07-19)

## Beschreibung

Die vorliegende Erfindung bezieht sich auf Polyester-mit-ÄtzmaterialMischverfahren und -Mischreaktoren, d.h. auf Verfahren und Mischreaktoren, bei denen Polyester, beispielsweise Polyethylenterephthalat (PET), mit einem Ätzmaterial, beispielsweise einer alkalischen Zusammensetzung, gemischt wird.

Insbesondere bezieht sich die Erfindung auf derartige Verfahren und Mischreaktoren, die beim Reinigen, Dekontaminieren und sogar beim Erhöhen der intrinsischen Viskosität von Polyestern effektiv verwendet werden können. Derartige Verfahren und Mischreaktoren können als solche in einer Vielzahl von Prozessen nützlich sein, einschließlich dem Trennen von Materialien, wie etwa Abfallmaterialien, die Unreinheiten und/oder Schmutzstoffe enthalten, von Polyestern und dem Verfestigen von Polyestern.

Ein Polyester ist ein polymerisches Material, welches aus der Veresterung von mehrbasischen organischen Säuren mit mehrwertigen Säuren hergestellt werden kann. Das wahrscheinlich am meisten hergestellte und verwendete Polyester ist PET, welches durch Reagieren von Terephthalsäure mit Ethylenglykol hergestellt werden kann.

Polyester werden derzeit in steigenden Mengen in verschiedenen Anwendungen verwendet. Beispielsweise werden Polyester im Allgemeinen verwendet, um alle Typen von Behältern, wie etwa Getränke- und Lebensmittelbehälter, fotographische Filme, Röntgenfilme, magnetische Aufzeichnungsbänder, elektrische Isolierung, chirurgische Hilfsmittel, wie etwa synthetische Arterien, Gewebe oder andere textile Produkte und viele andere Gegenstände herzustellen.

Eine Herausforderung auf dem Gebiet der Polyestertechnologie ist das Wiedergewinnen und Recycling von Polyester. Da Polyester ökonomisch umgeschmolzen und erneut geformt werden können, sind viele Versuche auf dem Weg, um so viel Polyester wie möglich nach dem Gebrauch wiederzugewinnen. Bevor Polyester wiedergewonnen werden können, ist es jedoch notwendig, die gebrauchten Polyester von anderen Produkten und Materialien zu trennen, die mit dem Polyester gemischt oder an diesem haftend gefunden werden können. Es sind im Stand der Technik Probleme aufgetreten bei dem Versuch, Polyester von anderen Abfallmaterialien zu trennen. Insbesondere sind Prozesse des Standes der Technik nicht in der Lage, Polyester effizient oder ökonomisch wiederzugewinnen, wenn eine signifikante Menge von anderem Material, Unreinheiten und Schmutzstoffen vorhanden ist.

Eine Mehrzahl von Prozessen des Standes der Technik zum Trennen von Polyestern von anderen Materialien haben sich auf "Aufschwimm-"Trenntechniken und mechanische Wiedergewinnprozesse konzentriert. In der Aufschwimmtrennung werden Polyester von anderen Materialien auf der Basis von Dichteunterschieden getrennt. Beispielsweise können Materialien, die Polyester enthalten, mit Wasser kombiniert werden. Die Materialien mit geringerer Dichte, die auf dem Wasser schwimmen, können leicht von dem untergetauchten Polyester getrennt werden. Diese Prozedur kann beim Trennen von Polyestern von vielen Unreinheiten mit niedriger Dichte effektiv sein. Aufschwimmtrenntechniken können jedoch nicht verwendet werden, wenn das Polyester in Kombination mit Materialien aufgefunden wird, die ebenfalls im Wasser sinken oder die Dichten aufweisen, die mit der von Polyestern vergleichbar ist.

Beispiele des letzteren schließen Polyvinylchlorid (PVC) und Aluminium ein, welche nicht in Wasser aufschwimmen. Tatsächlich weist PVC eine Dichte auf, die sehr ähnlich ist zu der Dichte von PET und wird daher oft falsch als PET identifiziert. Sowohl Aluminium als auch PVC müssen jedoch von Polyester getrennt werden, bevor es wiederverwendet werden kann. Wenn PET und PVC zusammen umgeschmolzen werden, werden insbesondere Salzsäuregase erzeugt, welche die Eigenschaften des resultierenden Plastikmaterials zerstören.

Neben dem Versagen, Polyester von Unreinheiten zu trennen, die schwerer sind als Wasser, versagen Aufschwimmtrenntechniken und herkömmliches Waschen auch dabei, Beschichtungen oder andere Schmutzstoffe, die im Allgemeinen an Polyester haften, zu entfernen. Beispielsweise werden Polyesterbehälter im Allgemeinen mit Dampfbarrierenbeschichtungen, Saran-Beschichtungen und/oder Tinten beschichtet.

Mechanische Wiedergewinnprozesse beinhalten typischerweise Waschprozesse, die verwendet werden, um Oberflächenbeschichtungen und Schmutzstoffe von Polyester abzustreifen, ohne dass eine wesentliche Reaktion zwischen dem Polyester und der Waschlösung auftritt. Beispielsweise offenbaren die US-Patente 5,286,463 und 5,366,998 eine Zusammensetzung und einen Prozess zum Entfernen von Klebstoffen, insbesondere von Harzen auf der Basis von Polyvinylidenhalid und Polyvinylhalid, von Polyesterschichten, wie etwa fotographischen Filmen. In einer Ausführungsform werden die Polyesterschichten mit einem reduzierenden Zucker und einer Base gemischt, um das klebende polymerische Harz von der Schicht zu entfernen. Eine Säure wird dann hinzugefügt, um das Harz auszufällen, welches dann von der Polyesterschicht getrennt werden kann.

Inzwischen hat sich der Fokus der Wiedergewinnung von Polyester von der Abfallverwertung der chemischen Umwandlung des Polyesters in nützliche chemische Komponenten zugewandt. In solchen Prozessen wurden alkalische Materialien verwendet. Beispielsweise offenbaren die US-Patente 5,395,858 und 5,580,905 Prozesse zum Wiedergewinnen von Polyestern, in welchen die Polyester auf ihre ursprünglichen chemischen Reaktionsstoffe reduziert werden.

Dieser Prozess schließt die Schritte des Kombinierens des Polyestermaterials mit einer alkalischen Komposition ein, um eine Mischung zu bilden. Die Mischung wird auf eine Temperatur erhitzt, die ausreichend ist, um das Polyester in ein alkalisches Salz einer mehrbasischen organischen Säure und ein Polypol umzuwandeln. Während des Prozesses wird die alkalische Komposition in einer Menge hinzugefügt, die ausreichend ist, um mit dem gesamten in der Mischung vorhandenen Polyester zu reagieren. Der vorstehende Prozess liefert die komplette chemische Umwandlung/Verseifung des Polyestermaterials. Dies kann jedoch dem Gesamtprozess erhebliche Kosten hinzufügen, da das Polyester schließlich umgebildet werden muss.

Das US 3,590,904 offenbart einen Prozess zum Entfernen von polymerischen Subschichten von Polyesterfilmbasen, die mindestens eine vinylidenhalidcopolymerische Schicht auf mindestens einer Oberfläche der Base aufweisen, durch Kontaktieren des Polyesterbasenmaterials mit heißem alkalischem Glykol, in dem bis zu 5 Gew.-% oder mehr Wasser vorhanden sein können, um eine Reaktion zwischen dem heißen Glykol und den Substratschichten zum Reinigen des Polyesters zu induzieren.

Die Neuerung der WO 00/18830 A1 brachte hervor, dass eine Reaktion von Polyestern, wie etwa PET, mit alkalischen Zusammensetzungen in einer Reaktionsumgebung, die zumindest im Wesentlichen frei von Wasser ist, das Reinigen, Dekontaminieren und sogar das Verbessern der intrinsischen Viskosität von Polyestern erlauben kann. Diese Neuerung stand in direktem Kontrast zu einem davor lange gehegten Glauben auf dem Gebiet des Polyester-Recyling, dass sich Polyester notwendigerweise In der Anwesenheit von ätzenden Materialien verschlechtern müssen.

In einem Aspekt bezieht sich die WO 00/18830 A1 auf ein Verfahren zum Behandeln eines Polyesters, welches das Kombinieren eines Polyesters mit einer alkalischen Zusammensetzung in einer Menge umfasst, die effektiv ist, um mindestens einen Teil des Polyesters zu bedecken. Das Polyester wird dann während des eigentlichen Reaktionsschrittes auf eine Temperatur erhitzt, die nicht größer ist als der Schmelzpunkt des Polyesters. Der vorstehend genannte eigentliche Reaktionsschritt wird in einer Umgebung ausgeführt, die mindestens im Wesentlichen frei von Wasser ist.

Diese bekannte Technik kann verwendet werden, um die Eigenschaften von Polyesterprodukten zu verbessern, die aus Prozessen zum Wiedergewinnen oder zum Recycling von polyesterhaltigen Materialien, die Schmutzstoffe und/oder Unreinheiten enthalten, erhalten wurden. In dieser Beziehung schließt ein Wiedergewinnverfahren das Mischen des polyesterhalten Materials mit einer alkalischen Zusammensetzung ein, wobei die alkalische Zusammensetzung in einer Menge verwendet wird, die effektiv ist, um mit einem Teil des Polyesters und des polyesterhaltigen Materials zu reagieren, gefolgt durch Erhitzen der Mischung im eigentlichen Reaktionsschritt auf eine Temperatur, die effektiv ist, um einen Teil des Polyesters zu verseifen, jedoch nicht ausreichend ist, um das Polyester zu schmelzen. Das Polyester kann dann physikalisch gereinigt und dekontaminiert werden. Ein Schlüsselaspekt dieses bekannten Prozesses ist es, dass der eigentliche Reaktionsschritt in einer Umgebung ausgeführt wird, welche zumindest im Wesentlichen frei von Wasser ist. Abhängig beispielsweise von der Prozessdauer kann das resultierende Polyester eine verbesserte i.v. und Farbe aufweisen. Vor der Wiederverwendung kann das Polyester durch Techniken behandelt werden, die im Stand der Technik bekannt sind, beispielsweise durch Waschen. Da diese bekannte Technik verwendet werden kann, um die intrinsische Viskosität des Polyesters zu erhöhen, kann sie tatsächlich auch in einem Verfahren zum Bilden, beispielsweise dem Verfestigen, von Polyestern verwendet werden.

Verfahren und Reaktoren der vorstehend genannten Art sind beispielsweise aus den Druckschriften EP 1 214 970, WO 02/102 884, DE 100 32 899, SU 165 0662, KR2005/0074666 und WO 03/020 483 bekannt.

Aufgabe der vorliegenden Erfindung ist es, Verfahren und Reaktoren der eingangs genannten Art zu verbessern.

Diese Aufgabe wird durch die Gegenstände der unabhängigen Ansprüche gelöst.

Weitere Ausführungsformen der Erfindung sind in den Unteransprüchen angegeben.

Die vorliegende Erfindung umfaßt unter anderem die Erkenntnis, dass das vorgenannte, aus der WO 00/18830 A1 bekannte Verfahren insbesondere beim Reagieren des Polyesters mit dem alkalischen Ätzmaterial, unter Umständen noch besser arbeiten kann.

Denn an der Innenseite des Mantels eines für das Mischen verwendeten Mischreaktors können sich Anhaftungen von Polyestermaterial in eine Dicke von etwa 5 cm bilden. Die vorliegende Erfindung hat weiterhin erkannt, dass durch die erhöhte Reibung des Polyestermaterials - infolge immer kleiner werdender Spaltmaße im Material in Richtung zur Innenseite des Mantels des Mischreaktors hin - eine erhöhte Produktion von Feinteilen erfolgt. Gleichzeitig hat die Erfindung erkannt, dass durch die isolierende Eigenschaft der vorgenannten Anhaftungen oder Ablagerungen von Polyestermaterial an der Innenseite des Mantels des Mischreaktors der Wärmeeintrag der geheizten Wand des Mischreaktors in das Innere des Mischreaktors reduziert wird.

Darüber hinaus hat die Erfindung erkannt, dass die somit notwendige regelmäßige Beseitigung der Anhaftungen zu erhöhten Ausfallzeiten des für das Mischen verwendeten Mischreaktors führt. Aber auch zwischen den Ausfallzeiten ist die Restfeuchte des Polyestermaterials am Mischreaktorauslauf zu hoch, um im nachfolgenden eigentlichen Reaktionsschritt der WO 00/18830 A1 hochwertiges Recyclingmaterial zu produzieren.

Darüber hinaus beträgt durch die vorgenannten Effekte der Verbrauch an Ätzmaterial nur unter 95 %, so dass weiterhin über 5 % freies Ätzmaterial im Reaktor vorhanden sind. Die Erfindung hat in diesem Zusammenhang erkannt, dass aufgrund des aufgrund der Anhaftungen reduzierten Wärmeeintrages entweder ein überhöhter Energieeinsatz zum Helzen des Mischreaktors notwendig ist oder aber bei normalem Energieeinsatz die maximale Materialtemperatur im Mischreaktor bei maximal 85°C liegt, was für den zu geringen Verbrauch von Ätzmaterial von unter 95 % verantwortlich ist. Denn die Erfindung hat weiter erkannt, dass erst bei über 95°C ein Verbrauch von Ätzmaterial von mehr als 95 % möglich ist.

Bevorzugte Ausführungsformen der Erfindung umfassen insbesondere mindestens eines der folgenden Merkmale:
Das Polyester wird vor dem Erhitzen, bevorzugt auf eine Flockengröße von etwa 0,005 m bis etwa 0,01 m, gemahlen. Dies hat sich für alle Prozessschritte als vorteilhaft für die Qualität des Endprodukts erwiesen.

Das Polyester wird nach dem Mahlen einem Sink-Aufschwimm-Trennvorgang unterzogen. Das Polyester kann nach dem Mahlen und vor dem Trennvorgang mindestens einem Reinigungsschritt unterzogen werden.

Das Polyester wird nach dem Sink-Aufschwimm-Trennvorgang getrocknet.

Das Polyester wird in einem Reaktor erhitzt, welcher Reaktor, bevorzugt vor dem Zugeben des Polyesters, bevorzugt auf eine Temperatur zwischen 95°C und 165°C, weiter bevorzugt auf eine Temperatur zwischen 100°C und 130 C, vorgeheizt wird. Durch das Vorheizen werden die oben in Bezug auf den Stand der Technik genannten Nachteile vermieden.

Das Polyester wird in drei Temperatur-Stufen erhitzt. Durch das 3-stufige Vorheizen werden die oben in Bezug auf den Stand der Technik genannten Nachteile verstärkt vermieden, ohne das eine zu große und somit nicht mehr wirtschaftliche Anzahl von Stufen erforderlich ist.

Das Polyester wird in der ersten Stufe, bevorzugt für etwa 5-15 Minuten, weiter bevorzugt für etwa zehn Minuten, auf eine Temperatur zwischen 95°C und 120°C, bevorzugt etwa 110°C, in der zweiten Stufe, bevorzugt für etwa 5-15 Minuten, weiter bevorzugt für etwa zehn Minuten, auf eine Temperatur zwischen 110°C und 130°C, bevorzugt etwa 120°C, und, wenn vorhanden, in der dritten Stufe, bevorzugt für etwa 5-15 Minuten, weiter bevorzugt für etwa zehn Minuten, auf eine Temperatur zwischen 120°C und 140°C, bevorzugt etwa 130°C, erhitzt. Durch diese vordefinierten Temperaturfenster werden die oben in Bezug auf den Stand der Technik genannten Nachteile noch weiter vermieden.

Während des Erhitzens wird das Mischen des Polyesters mit dem Ätzmaterial begonnen, bevorzugt durchgeführt. Dadurch werden die oben in Bezug auf den Stand der Technik genannten Nachteile vermieden.

Die Zeit zwischen Beginn und Ende des Erhitzens des Polyesters beträgt zwischen 5 und 45 Minuten, bevorzugt zwischen 10 und 30 Minuten, weiter bevorzugt zwischen 10 und 15 Minuten, bevorzugt bei im Wesentlichen gleichbleibender Strömungsgeschwindigkeit des Polyesters. Dadurch werden die oben in Bezug auf den Stand der Technik genannten Nachteile vermieden.

Das Polyester verbleibt solange in dem Schritt des Erhitzens bis die Restfeuchte kleiner 3 %, bevorzugt kleiner 2 %, weiter bevorzugt kleiner 1,6 %, beträgt. Dadurch werden die oben in Bezug auf den Stand der Technik genannten Nachteile vermieden.

Das Polyester verbleibt solange in dem Schritt des Erhitzens bis mehr als 95 %, bevorzugt mehr als 98 %, weiter bevorzugt mehr als 99 %, des, bevorzugt durch Phenolphthalein-Titration bestimmten freien, Ätzmaterials verbraucht ist. Dadurch werden die oben in Bezug auf den Stand der Technik genannten Nachteile vermieden.

Das Erhitzen des Polyesters wird in einem Reaktor mit einem Durchsatz von mindestens 2000 kg/h, bevorzugt mindestens 2500 kg/h, durchgeführt. Dadurch werden die oben in Bezug auf den Stand der Technik genannten Nachteile vermieden.

In den jeweiligen Stufen wird eine homogene Temperaturverteilung der Temperatur in für die jeweiligen Stufen vorgesehenen Zonen eines zur Durchführung des Verfahrens verwendeten Reaktors eingestellt. Dadurch werden die oben in Bezug auf den Stand der Technik genannten Nachteile vermieden.

Für die Durchführung des Erhitzens und des Mischens wird als ein Reaktor ein Doppelwellen-Mischschnecken-Reaktor verwendet. Dadurch werden die oben in Bezug auf den Stand der Technik genannten Nachteile vermieden.

Durch die Verwendung eines Sägezahnprofils für die, bevorzugt mit einer Schneckengangsteigung von etwa 100 mm versehenen, weiter bevorzugt ineineinander kämmenden, Schneckenwellen der Mischschnecke des Doppelwellen-Mischschnecken-Reaktors wird die dem Polyester zugewandte Innenwandung des Doppelwellen-Mischschnecken-Reaktors von Anhaftungen des Polyesters im Wesentlichen freigehalten. Dadurch werden die oben in Bezug auf den Stand der Technik genannten Nachteile vermieden.

Die vorliegende Erfindung ist insbesondere ausgerichtet auf die Wiedergewinnung von Essensbehältern und Getränkebehältern, die aus PET hergestellt sind. Durch den Prozess der vorliegenden Erfindung können Polyester aus Endverbraucherabfall besser wiedergewonnen und wiederverwendet werden, auch wenn die Polyester mit Polyvinylchlorid oder Aluminium, haftend an verschiedenen Beschichtungen, gemischt oder mit verschiedenen organischen und anorganischen Verbindungen verschleppt aufgefunden werden. Derartige Materialien werden derzeit großteils immer noch in Müllgruben geworfen oder auf Grund des Fehlens eines ökonomischen Prozesses, der das Polyester wieder eingewinnen kann, nach einer einzigen Verwendung verascht.

Die vorliegende Erfindung ist in der Lage, signifikante Vorteile gegenüber den mehr traditionellen Prozessen zur Verfügung zu stellen, die im Stand der Technik verwendet werden. Insbesondere ist der Prozess in der Lage ein wiedergewonnenes PET-Produkt mit verbesserten Eigenschaften zur Verfügung zu stellen, beispielsweise einem hohen Grad von Reinheit, guter Farbe und möglicherweise sogar einer verbesserten intrinsischen Viskosität. Darüber hinaus ist die vorliegende Erfindung in der Lage, diese Produkte mit einer akzeptablen Ausbeute und bei niedrigeren Verarbeitungskosten zur Verfügung zu stellen, da er keine "Repolymerisierung" der Monomere in Kontrast zu den typischen Depolymerisationsprozessen benötigt.

Zusätzlich zum Wiedergewinnen können Prozesse zum Bilden von Polyestern, einschließlich beispielsweise bekannten Verfestigungsprozessen, durch die Verwendung des erfindungsgemäßen Behandlungsverfahrens verbessert werden.

Das Verfahren dieser Erfindung ist in der Lage, eine Anzahl von signifikanten Vorteilen zur Verfügung zu stellen. Beispielsweise ist es in der Lage, das Reinigen und/oder Dekontaminieren von Polyester zu verbessern.

Tatsächlich kann das Polyester dank der vorliegende Erfindung bis zu einem Niveau gereinigt und/oder dekontaminiert werden, welches ausreichend ist, um verschiedene staatliche Richtlinien, beispielsweise FDA-Richtinien, zu erfüllen.

Natürlich sollte erkannt werden, dass das gewünschte Niveau des Reinigens oder Dekontamination abhängig von der am Ende stehenden Verwendung des Polyesters ist.

Der eigentliche Reaktionsschritt (in der Figur "Erhitzen/Reagieren" genannt) kann auch verwendet werden, um die intrinsische Viskosität des Polyesters zu erhöhen. Bis zu diesem Punkt wird der eigentliche Reaktionsschritt (in der Figur "Erhitzen/Reagieren" genannt) in Anwesenheit einer trockenen Atmosphäre für eine Dauer ausgeführt, die ausreichend ist, die intrinsische Viskosität des Polyesters zu erhöhen. Eine minimale Dauer ist beispielsweise abhängig von dem Wassergehalt der Umgebung und kann so kurz sein wie 10 bis 15 Minuten.

Im Licht der vorstehenden Vorteile kann die erfinderische Technik für eine Anzahl von Anwendungen verwendet werden, einschließlich sowohl dem Bilden, beispielsweise dem Verfestigen, als auch dem Wiedergewinnen von Polyestern.

Eine bestimmte Anwendung, in welcher das erfinderische Verfahren signifikante Vorteile zur Verfügung stellen kann, beinhaltet auch die Wiedergewinnung von Polyestermaterialien.Diese und andere Aspekte der Erfindung werden in der folgenden Beschreibung näher anhand eines Ausführungsbeispiels erläutert.

Die Zeichnung illustriert in:
- Fig. 1: ein Flussdiagramm eines Recyclingprozesses für PET gemäß eines Ausführungsbeispiels der Erfindung;
- Fig. 2: eine perspektivische schematische teilweise als Explosionsdarstellung ausgeführte Ansicht für die Durchführung eines erfindungsgemäßen Verfahrens; und
- Fig. 3: eine Schnittdarstellung des Reaktors der Figur 2.

Wie oben diskutiert, bezieht sich die vorliegende Erfindung auf eine Technik zum stufenweisen Erhitzen des mit einem Ätzmaterial gemischten Polyesters zur Durchführung der eigentlichen Behandlung von Polyestern, die das Dekontaminieren und das Recycling von Polyestern, wie etwa PET, umfasst, indem das Polyester mit dem aus alkalischen Materialen bestehenden Ätzmaterial bei stufenweise definierten Temperaturen zur Reaktion gebracht wird.

Ein erster Aspekt der Erfindung beinhaltet das Erhitzen von Polyester vor dem Mischen des Polyesters mit einem kaustischen Material, z.B. mit einer alkalischen Zusammensetzung, wie etwa Natriumhydroxid. Im Gegensatz zum bekannten Verfahren der WO-Schrift erfolgt das Erhitzen des Polyester mit dem kaustischen Materials dem Ätzmaterial.

Bei einer bevorzugten Ausführungsform der Erfindung ist nach der Durchführung des Mischverfahrens die eigentliche Reaktions-Umgebung mindestens im Wesentlichen frei von Wasser. Bevorzugt kann der dem erfindungsgemäßen Verfahren vorausgehende Prozess auch das Entfernen jeglicher vorhandener Feuchtigkeit einschließen, beispielsweise durch Trocknen vor dem stufenweisen Erhitzen gemäß der vorliegenden Erfindung.

Im folgenden seien vorab einige Begrifflichkeiten näher erläutert:
Durch "zumindest im Wesentlichen frei" ist gemeint, dass die Menge des in der Umgebung vorhandenen Wassers geringer ist als diejenige, welche zu einer Verschlechterung des Polyesters während des Erhitzens führt. Diese Menge liegt typischerweise nicht über 80 ppm (-40°C Dew Pt.), bevorzugt nicht über 10 ppm, weiter bevorzugt nicht über 5 ppm (-62°C Dew pt.). Es existiert kein theoretisches Minimum, da die Menge des Wassers so gering wie 1 ppm der Umgebung oder sogar darunter liegen kann.

Ein Polyester bezieht sich beispielsweise auf eine Veresterung oder ein Reaktionsprodukt zwischen einer mehrbasischen organischen Säure und einem mehrwertigen Alkohol. Es wird davon ausgegangen, das jedes bekannte Polyester oder Copolyester in der Erfindung verwendet werden kann. Der erfinderische Prozess ist insbesondere auf eine Klasse von Polyestern ausgerichtet, die hier als Polyolpolyterephthalate bezeichnet werden, in den Terephthalsäure als die mehrbasische organische Säure dient.

Wie hier verwendet, bezieht sich eine mehrbasische organische Säure auf jede organische Säure mit zwei oder mehr Carboxylgruppen (-COOH). Die meisten Polyester sind von zweibasischen Säuren oder, mit anderen Worten, von Dicarboxylsäuren abgeleitet. Mehrbasische Säuren können eine lineare oder eine zyklische Konformation aufweisen. Beispiele von linearen mehrbasischen Säuren, die verwendet werden können, um Polyester herzustellen, schließen aliphatische Dicarboxylsäuren ein, und insbesondere die aliphatischen Dicarboxylsäuren, die bis zu zehn Kohlenstoffatome in ihren Ketten aufweisen. Diese Säuren schließen Adipinsäure, Glutarsäure, Succinsäure, Malonsäure, Oxalsäure, Pimelinsäure, Suberinsäure, azelaische Säure, Sebacinsäure, lameische Säure und Fumarsäure ein.

Zyklische mehrbasische organische Säuren schließen auf der anderen Seite die isozyklischen Dicarboxylsäuren ein. Die Säuren sind als Phthalsäuren, Isophthalsäuren, Terephthalsäuren und Naphthalindicarboxylsäuren bekannt, und insbesondere Terephthalsäure wird verwendet, um PET herzustellen, welches wahrscheinlich das kommerziell am meisten erhältliche Polyester ist.

Wie oben beschrieben, wird eine mehrbasische organische Säure mit einem mehrwertigen Alkohol kombiniert, um ein Polyester herzustellen. Mehrwertige Alkohole sind Verbindungen, die mindestens zwei Hydroxylgruppen aufweisen. Viele Polyester werden unter Verwendung eines mehrwertigen Alkohols synthetisiert, welcher zwei Hydroxylgruppen aufweist, welche als Diole bezeichnet werden. Diole werden normalerweise durch die Nettohinzufügung zweier Hydroxylgruppen zu der Kohlenstoffdoppelbindung aus einem Alken in einem Verfahren hergestellt, welches als Hydroxylgruppenaddition bekannt ist. Mehrwertige Alkohole werden im Allgemeinen als Glykole und Polyalkohole bezeichnet. Beispiele von mehrwerten Alkoholen, die verwendet werden, um Polyester herzustellen, schließen Ethylenglykol, Propylenglykol, Butylenglykol und Zyklohexandimethanol ein.

Für beispielhafte Zwecke enthält die folgende Tabelle eine nicht vollständige Liste von kommerziell erhältlichen Polyestern gemäß der Erfindung. Für jedes Polyester sind eine mehrbasische organische Säure und ein mehrwertiger Alkohol angegeben.

| POLYESTER | MEHRBASISCHE ORGANISCHE SÄURE | DIOL |
|---|---|---|
| Polyethylenterephthalat | Terephthalsäure | Methylenglykol |
| Polybutylenterephthalat | Terephthalsäure | Butylenglykol |
| PETG Copolyester | Terephthalsäure | Zyklohexandimethanol und Ethylenglykol |
| PBTG Copolyester | Terephthalsäure | Zyklohexandimethanol und Butylenglykol |
| Polyzyklohexandimethanolterephthalat | Terephthalsäure | Zyklohexandimethanol |
| PEN Polyester | Naphthalendicarboxylsäure | Ethylenglykol |

Das Polyester liegt typischerweise in einer diskreten Form vor, beispielsweise fein zerteilt oder pelletisiert. Beispiele von geeigneten Partikeln schließen Pellets ein mit einer Größe von 1-15 mm und Flocken mit einer Größe von 3 -20 mm, bevorzugt etwa 5-10 mm. Die genaue Form ist jedoch insoweit nicht kritisch für die vorliegende Erfindung, da nahezu jede Partikelgröße von Polyester geeignet ist, durch das ätzende Material beschichtet zu werden.

Das in der Erfindung verwendete Ätzmaterial oder ätzende Material kann jedes ätzende Material sein, welches aus dem Stand der Technik bekannt ist. Bestimmte Beispiele ätzender Materialien schließen alkalische Zusammensetzungen ein, wie etwa Natriumhydroxid, Kalziumhydroxid, Magnesiumhydroxid, Potassiumhydroxid, Lithiumhydroxid und Mischung derselben.

Die Menge des verwendeten ätzenden Materials ist diejenige Menge, die benötigt wird, um mindestens einen Teil des Polyesters zu beschichten. Vorzugsweise wird das ätzende Material in einer Menge eingeführt, die ausreichend ist, um das gesamte Polyester zu beschichten. Die genaue Menge des ätzenden Materials hängt von dem Niveau der vorhandenen Unreinheiten und der benötigten Reinigung ab, um effektiv eine bestimmte Menge von Unreinheiten zu entfernen.

Ein beispielhafter Wiedergewinnprozess, bei dem die vorliegende Erfindung zur Anwendung kommen kann, wird nun in Begriffen eines bevorzugten Beispieles beschrieben, welches in der Zeichnung dargestellt ist.

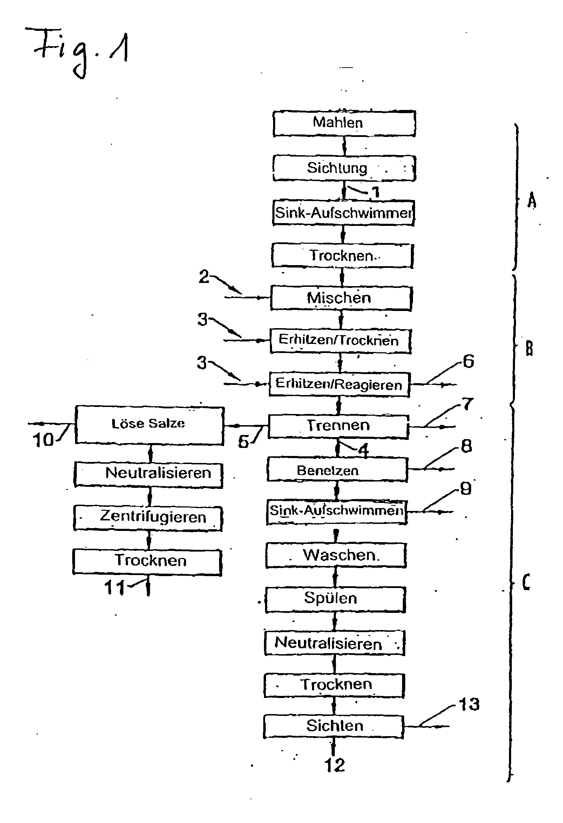

Wie in der Zeichnung der Fig. 1 dargestellt ist, beinhaltet der Wiedergewinnprozess typischerweise drei Phasen, d.h. eine Vorbehandlung des Polyesters, welche im Allgemeinen als A dargestellt ist, eine Reaktion des PET, welche im Allgemeinen als B dargestellt ist, und eine Trennung und Nachbehandlung der Reaktionsprodukte, welche als C dargestellt ist.

Die erste dieser Phasen beinhaltet eine Vorbehandlung des PET. In dieser Beziehung kann das Polyester 1, wenn gewünscht, vor einem Kontakt mit einer alkalischen Zusammensetzung in eine bestimmte Größe zerteilt oder zerrieben werden. Eine Sichtung der Flocken wird nur zum Zwecke einer Erleichterung der Handhabung vorgenommen.

Auch können die Materialien, die das Polyester enthalten, vor der Kombination mit der alkalischen Zusammensetzung in Wasser oder ein anderes Fluid eingebracht werden, um die weniger dichten oder leichteren Materialien von den schwereren Materialien einschließlich des Polyesters zu trennen. Derartige Techniken sind im Stand der Technik sehr gut bekannt. Insbesondere ist es bekannt, dass Polyester im Wasser sinkt, während andere Polymere, wie etwa Polyolefine, und Papierprodukte im Wasser aufschwimmen. Daher können die leichteren Materialien leicht von den schwereren Materialien getrennt werden, wenn sie mit einem Fluid in Kontakt kommen. Dass die Materialien vor dem Kontaktieren mit der alkalischen Zusammensetzung einem Sink/Aufschwimm-Trennschritt ausgesetzt werden, reduziert nicht nur die Menge des Materials, welches verarbeitet wird, sondern entfernt auch vor der weiteren Verarbeitung die Materialien von dem Polyester.

Das Polyester kann, wenn es einem Schritt ausgesetzt war, welcher Wasser einschließt, beispielsweise einem Sink/Aufschwimmtrennschritt, vor der Kombination mit dem alkalischen Material getrocknet werden. Diese Trocknung, welche bei Temperaturen von nicht mehr als 160°C, bevorzugt von 130-160°C stattfindet, kann mit jedem bekannten Verfahren des Standes der Technik ausgeführt werden.

Die nächste Phase des Prozesses, B, beinhaltet die vorliegende Erfindung. Er umfasst das Mischen und Erhitzen des Polyesters, zusammen mit dem ätzenden Material 2. Wenn beispielsweise mit dem ätzenden Material erneut Feuchtigkeit in das Material eingeführt wurde, kann das Material nach dem Mischen und vor dem Erhitzen getrocknet (in der Figur "Erhitzen/Trocknen" genannt) werden. Das Trocknen wird bevorzugt bei einer Temperatur von nicht mehr als 160°C, weiter bevorzugt von 130-160°C, ausgeführt.

Die Umgebung, in welcher der eigentliche Reaktionsschritt (in der Figur "Erhitzen/Reagieren" genannt) nach dem Mischen ausgeführt wird, solite zumindest im Wesentlichen frei von Wasser ist. Aufgrund von Kostenüberlegungen ist eine Umgebung mit trockener Luft bevorzugt, es kann jedoch eine inerte Atmosphäre, wie etwa Stickstoff, Argon oder dgl., effektiv verwendet werden.

Die Temperatur, auf welche das Material im eigentlichen Reaktionsschritt erhitzt wird, hängt von dem Reaktionsverlauf der Reaktion ab. Das bedeutet, dass die Behandlung theoretisch zwar bei Temperaturen bis nahezu zum Schmelzpunkt des Polyesters ausgeführt werden kann. Die bevorzugten Temperaturen für den eigentlichen mehrstufigen erfindungsgemäßen Reaktionsschritt (in der Figur "Erhitzen/Reagieren" genannt) liegen jedoch nicht bei den aus dem Stand der Technik bekannten 200-245°C. Vielmehr liegen die Temperaturen gemäß der Erfindung in dem eigentlichen Reaktionsschritt nicht auf einer Stufe sondern liegen in mehreren Stufen vor. Die Definition der Temperaturen der einzelnen Stufen wird gemäß der Erfindung in Abhängigkeit von einem Reaktionsverlauf der Reaktion zwischen PET und Ätzmaterial definiert. Eine derartige Definition kann vorab vorgenommen werden, wenn ein bestimmter Reaktionsverlauf einmal probeweise durchgeführt wurde und bestimmte Temperaturstufen dadurch definiert wurden. In einer weiter bevorzugten Ausführungsform kann jedoch die Einstellung der einzelnen Temperaturstufen auch im Rahmen eines klassischen Regelkreises vorgenommen werden, der in Abhängigkeit von einem Reaktionsverlauf zwischen PET und Ätzmaterial in Echtzeit die Temperatur jeder einzelnen Stufe einstellt, um am Ende der letzten Temperaturstufe eine optimale Restfeuchte von weniger als 1,6 % im Reaktionsgemisch zu haben bzw. - als Alternative oder kumulierte Bedingung - die Temperaturstufen jeweils so einstellen zu können, dass mehr als 99 % des durch Phenolphthalein-Titration bestimmten freien Ätzmaterials verbraucht sind. Im Einzelnen hat die Erfindung ermittelt, dass die optimalen Temperaturfenster für die einzelnen Stufen im Bereich zwischen 95°C und 140°C liegen. Weiter wurde festgestellt, dass eine ansteigende Ausgestaltung des Temperaturverlaufs zwischen den einzelnen Stufen bevorzugt ist. Die genauen Temperaturbereiche, die im vorliegenden Ausführungsbeispiel bevorzugt sind, werden weiter unten noch genauer angegeben. Zentral bei der Temperatursteuerung der vorliegenden Erfindung ist vor allen Dingen, dass durch die abgestufte Temperatursteuerung ein gesteuerter Reaktionsverlauf der Reaktion zwischen Ätzmaterial und kontaminiertem PET über die Zeit möglich ist,

Die dargestellte Ausführungsform der Erfindung kann insbesondere mindestens einen der folgenden Schritte umfassen:
Das Polyester wird vor dem Erhitzen, bevorzugt auf eine Flockengröße von etwa 0,005 m bis etwa 0,01 m, gemahlen, siehe Schritt "Mahlen".

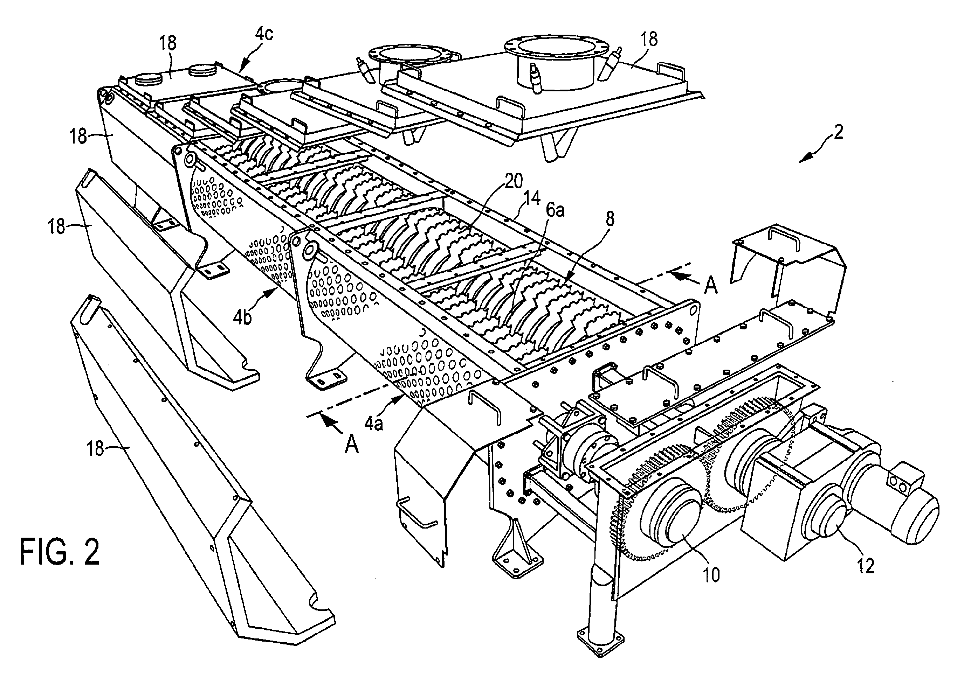

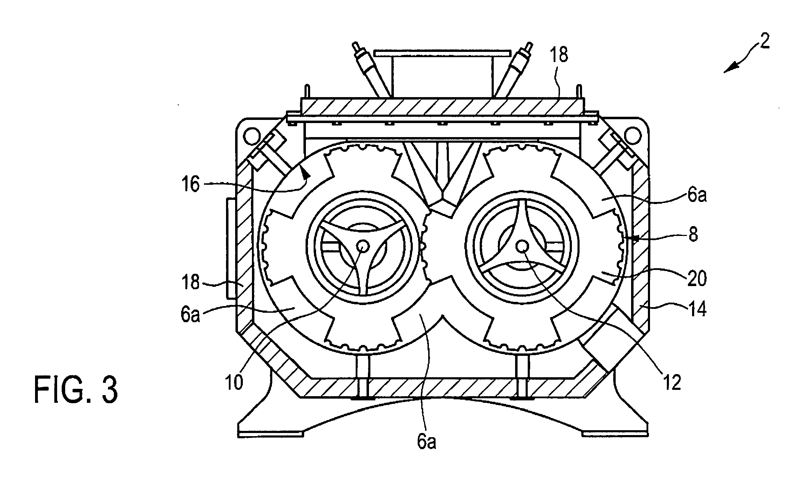

Das Polyester wird nach dem Mischen in einem Reaktor 2 (siehe Figuren 2 und 3) erhitzt, welcher Reaktor 2 auf eine Temperatur zwischen 95°C und 165°C, bevorzugt auf eine Temperatur zwischen 100°C und 130°C, vorgeheizt wird.

Das Polyester wird in Zonen 4a, 4b, 4c (siehe Figur 2 und 3) in drei Temperatur-Stufen erhitzt.

Das Polyester wird in der ersten Stufe der Zone 4a für etwa zehn Minuten auf eine Temperatur zwischen 95°C und 120°C, bevorzugt etwa 110°C, in der zweiten Stufe der Zone 4b für etwa zehn Minuten auf eine Temperatur zwischen 110°C und 130°C, bevorzugt etwa 120°C, und in der dritten Stufe der Zone 4c für etwa zehn Minuten auf eine Temperatur zwischen 120°C und 140°C, bevorzugt etwa 130°C, erhitzt.

Während der ersten Stufe des Erhitzens wird bereits das Mischen des Polyesters mit dem Ätzmaterial begonnen. Es wird der eigentliche Reaktionsprozeß des Polyesters mit dem Ätzmaterial vollständig in der Zeit durchgeführt, in denen das Gemisch in den drei Temperaturstufen reagiert.

Die Zeit zwischen Beginn und Ende des Erhitzens des Polyesters beträgt zwischen 5 und 45 Minuten, bevorzugt zwischen 10 und 30 Minuten, weiter bevorzugt zwischen 10 und 15 Minuten, bevorzugt bei im Wesentlichen gleichbleibender Strömungsgeschwindigkeit des Polyesters.

Das Polyester verbleibt solange in dem Schritt des 3-stufigen Erhitzens und Reagierens bis die Restfeuchte kleiner 3 %, bevorzugt kleiner 2 %, weiter bevorzugt kleiner 1,6 %, beträgt.

Das Polyester verbleibt solange in dem Schritt des 3-stufigen Erhitzens und Reagierens bis mehr als 95 %, bevorzugt mehr als 98 %, weiter bevorzugt mehr als 99 %, des, bevorzugt durch Phenolphthalein-Titration bestimmten freien, Ätzmaterials verbraucht ist.

Das Polyester wird während des Erhitzens und des Mischens in einem Reaktor mit einem Durchsatz von mindestens 2000 kg/h, bevorzugt mindestens 2500 kg/h, geführt.

In den jeweiligen Zonen 4a, 4b, 4c des Reaktors 2 wird eine homogene Temperaturverteilung der Temperatur eingestellt.

Für die Durchführung des mit den oben beschriebenen 3 Temperaturstufen versehenen Reaktionsprozesses wird ein in den Figuren 2 und 3 dargestellter Doppelwellen-Mischschnecken-Reaktor 2 verwendet. Durch die Verwendung eines Sägezahnprofils 8 für die, mit einer Schneckengangsteigung von etwa 100 mm versehenen, ineinander kämmenden, Schneckenwellen 10, 12 der Mischschnecke 14 des Doppelwellen-Mischschnecken-Reaktors 2 wird die dem Polyester zugewandte Innenwandung 16 des Doppelwellen-Mischschnecken-Reaktors 2 von Anhaftungen des Polyesters im Wesentlichen freigehalten.

Der Abschnitt B der Figur 1 umfasst also die erfindungsgemäß gestuften Erhitzungsschritte, einschließlich der Möglichkeit eines Erhitzens in einer Umgebung mit trockener Luft.

Das Mischen kann also gefolgt werden durch ein Erhitzen/Trocknen und eine dann folgende Einführung der so getrockneten Mischung in eine weitere Reaktionskammer 6a des Reaktors 2. Ein heißer trockener Luftstrom 3 kann auch während der Erhitzungsschritte in der Reaktionskammer 6a eingeführt werden, um eine angemessen wasserfreie Umgebung zur Verfügung zu stellen. Während des Erhitzungs/Reaktionsschrittes kann ein volatiler Komponenten enthaltender Strom 6 von der Reaktionskammer 6a entfernt werden.

Die aktuelle Temperatur, auf welche die Mischung in der Reaktionskammer 6a erhitzt wird, hängt von einer Anzahl von Faktoren ab, einschließlich der bestimmten Unreinheiten und/oder Kontaminationsstoffe, die in der Mischung in der Reaktionskammer 6a noch vorhanden sind.

Die Ausrüstung und die Vorrichtung, die während des Prozesses in der Reaktionskammer 6a verwendet werden, können auch variieren. In dem in den Figuren 2 und 3 dargestellten Ausführungsbeispiel wird jedoch ein erfindungsgemäßer Reaktor 2 für die Durchführung des Erhitzens und des Mischens in der Form eines Doppelwellen-Mischschnecken-Reaktors 2 verwendet. In diesem Reaktor 2 wird bevorzugt eine Sägezahnprofil 8 für die Schneckenwellen 10, 12 der Mischschnecke 14 des Doppelwellen-Mischschnecken-Reaktors 2 verwendet. Diese Schneckenwellen 10, 12 kämmen ineinander und sind mit einer Schneckengangsteigung von etwa 100 mm versehen. Durch die Verwendung eines solchen Doppelwellen-Mischschnecken-Reaktors 2 erfolgt eine sehr gute Homogenisierung des Gemisches aus PET und Ätzmaterial. Die für die drei Temperaturstufen vorgesehenen drei Heizzonen 4a, 4b, 4c in dem Reaktor 2 und auch die die drei Heizzonen 4a, 4b, 4c jeweils vollständig übergreifenden zwei Schneckenwellen 10, 12 der Doppelschnecke 2 sind jeweils dampfbeheizt und zur Sicherstellung der jeweils gewünschten Temperatur für jede Temperaturstufe dementsprechend auch für jede Temperaturstufe einzeln separat in ihrer Temperatur regelbar. Darüber hinaus weist der erfindungsgemäße Doppelwellen-Mischschnecken-Reaktor 2 einen Doppelmantel 18 auf. Dieser ist bevorzugt so gestaltet, dass die Mischschnecke 14 nicht unter die den Fachmann einschlägig bekannten TÜV-Überwachungspflichten für derartige Druckbehälter fallen. Die Schnecke 14 ist so aufgebaut, dass sie für einen optimierten Wärmeübergang auf die Schneckenflügel 20 sorgt und eine homogene Temperaturverteilung in der jeweiligen Temperaturstufe erzielt. Durch die Schneckengangsteigung von 100 mm wird eine erhöhte Wärmetauschfläche zur Verfügung gestellt, um den vorgenannten optimierten Wärmeübergang zu erreichen. Darüber hinaus hat sich erfindungsgemäß herausgestellt, dass durch die vorgenannten Schneckengangsteigung von etwa 100 mm bei den oben genannten Temperaturbereichen für die einzelnen Stufen 4a, 4b, 4c zwischen 95°C und 140°C insgesamt eine ausreichende Verweilzeit von etwa zehn Minuten erzielt werden kann. Darüber hinaus zeichnet sich die erfindungsgemäße Ausführung des Reaktors 2 durch eine geringe Leistungsaufnahme von maximal 3 kW für den Antrieb des Reaktors 2 aus.

Die letzte Stufe des Prozesses, C, beinhaltet die Trennung der verschiedenen Reaktionsprodukte. In diesem Wiedergewinnprozess wird der Teil des Polyesters, der verseift ist, in einen mehrwertigen Alkohol und in ein saures Salz umgewandelt. Wenn PET beispielsweise mit Natriumhydroxid verseift wird, dann wird das PET in Ethylenglykol und Dinatriumterephthalat umgewandelt. Der mehrwertige Alkohol, der während des Prozesses gebildet wird, verbleibt entweder als eine Flüssigkeit in der Mischung oder wird aus der Reaktion verdampft, wenn die Mischung nach oberhalb des Dampfpunktes des mehrwertigen Alkohols erhitzt wird.

Der erste Schritt der Trennstufe beinhaltet eine Trennung des Polyesters 4, des sauren Salzes 5, bzw. jeglicher Feinstoffe 7. Diese Komponenten werden dann individuell gehandhabt.

Das gebildete saure Salz oder Metallsalz, wie etwa Dinatriumterephthalat, löst sich in dem Wasser, wenn die erhitzten Materialien gewaschen werden. Wenn es gewünscht ist, kann das Metallsalz später aus dem Waschwasser wiedergewonnen werden. Wenn das saure Salz beispielsweise ein Terephthalat ist, kann das Waschwasser zunächst gefiltert werden, um jegliche nicht gelöste Unreinheiten und Kontaminationsstoffe, die durch den Strom 10 angedeutet sind, zu entfernen. Als nächstes kann das Waschwasser säuerlich gemacht werden, um zu verursachen, dass Terephthalsäure ausfällt. Um die Lösung säuerlich zu machen kann eine mineralische Säure, wie etwa Hydrochlorsäure, Phosphorsäure oder Schwefelsäure oder eine organische Säure, wie etwa Essigsäure oder Kohlensäure, zu der Lösung hinzugefügt werden. Sobald die Terephthalsäure ausfällt, kann die Terephthalsäure gefiltert, gewaschen und getrocknet werden, was ein relativ reines Produkt 11 zurücklässt.

Vor der Wiederverwendung wird das Polyester ebenfalls behandelt. Ein erster Schritt in der Trennstufe des Wiedergewinnprozesse beinhaltet ein Waschen des Polyestermaterials.

Der Waschschritt, der geeignet ist zur Verwendung in Verbindung mit dem resultierenden PET kann jeden Waschschritt oder jede Waschvorrichtung beinhalten, die im Stand der Technik bekannt ist. Es ist jedoch bevorzugt, dass ein Waschschritt mit hohen Scherkräften verwendet wird, um das Entfernen von Materialien, wie etwa von Oligomeren oder anderen organischen und anorganischen Zusammensetzungen von der Oberfläche des PET zu erleichtern. Derartige Wäscher mit hohen Scherkräften sind im Stand der Technik von Hersteller, wie etwa von Reg-Mac oder Sorema, kommerziell erhältlich.

Darüber hinaus schließen die Waschschritte weiterhin eine Neutralisierung jeglicher verbleibender alkalischen Materialien durch das Hinzufügen einer geeigneten Säure, wie etwa von Phosphorsäure, ein.

Andere Schritte in der Behandlung des Polyesters nach der Trennung hängen von den Kontaminationsstoffen und/oder Unreinheiten in den Startzusammensetzungen ab. Zu diesem Zeitpunkt kann die Erfindung Polyester aus einer Vielzahl von Kontaminationsstoffen und/oder Unreinheiten effektiv zurückgewinnen.

Beispielsweise kann das Verfahren verwendet werden, um Polyester von Polyvinylchlorid zu trennen. Dieser Aspekt des Prozesses beinhaltet das Erhitzen der Mischung aus alkalischer Zusammensetzung und den Polyestermaterialien in der Reaktionskammer auf eine Temperatur, die ausreichend ist, um mindestens einen Teil des Polyvinylchlorids zu entchloren, wodurch das Polyvinylchlorid in eine von dem Polyester trennbare Form umgewandelt wird. Die Mischung wird in der Reaktionskammer jedoch höchstens auf eine Temperatur erhitzt, die nicht ausreicht, um das Polyester zu schmelzen.

Um das entchlorte Polyvinylchlorid von dem Polyester zu trennen, kann die Mischung, nachdem sie in der Reaktionskammer erhitzt wurde, mit einem Fluid, wie etwa Wasser, kombiniert werden. Wenn es in Wasser verbracht wird, wird das Polyester sinken, während das entchlorte Polyvinylchlorid aufschwimmen wird. Somit kann ein Strom 9, der beispielsweise entchlortes Polyvinylchlorid enthält, leicht von dem Polyester getrennt werden. Optional können Gasbläschen, die an dem entchlorten Polyvinylchlorid haften werden, durch das Wasser hindurch geleitet werden, um die Trennung zu erleichtern.

Zusätzlich kann entfärbtes PVC durch Farbsortiertechniken, die aus dem Stand der Technik bekannt sind, getrennt werden. Beispiele von kommerziell erhältlicher Ausrüstung schließen jene ein, die durch Hersteller, wie etwa SRC, Satake und MSS hergestellt wurden.

Der Prozess in der Reaktionskammer 6a kann Polyester auch von kleinen Partikeln, d.h. in der Größenordnung von Mikrometern, aus Aluminium oder dgl. effektiv trennen. Dieser Aspekt schließt das Erhitzen der Mischung aus Abfallmaterial und alkalischer Zusammensetzung in der Reaktionskammer 6a auf eine Temperatur ein, die ausreichend ist, sodass die alkalische Zusammensetzung mit mindestens einem Teil des Metalls reagiert, ohne das Polyester zu schmelzen. Das Nebenprodukt der Reaktion zwischen alkalischer Zusammensetzung und dem Aluminium kann in anschließenden Waschschritten entfernt werden.

Ein anderer Aspekt des Wiedergewinnprozesses in der Reaktionskammer 6a beinhaltet das Entfernen von Beschichtungen und/oder eingeschleppter organischer und anorganischer Verbindungen aus Polyestern. In diesem Zusammenhang wird die Mischung aus Polyester und ätzendem Material in der Reaktionskammer 6a auf eine Temperatur erhitzt, die ausreichend ist, um die äußere Oberfläche des Polyesters zu verseifen, wodurch die Beschichtungen von dem Polyester entfernt werden. Die Mischung wird in der Reaktionskammer 6a auf eine Temperatur erhitzt, die nicht ausreicht, um das Polyester zu schmelzen.

Der Wiedergewinnprozess in der Reaktionskammer 6a kann kontinuierlich, also mit sich kontinuierlich bewegenden Teilchen ausgeführt werden, oder er kann als ein schubweises System aufgebaut werden. Praktisch jedes Polyestermaterial kann verarbeitet werden. Vorzugsweise werden die Polyestermaterialien von dem festen Abfallstrom wiedergewonnen, wodurch viele Umweltbedenken und Abfallprobleme gelindert werden.

## Patentansprüche

1. Polyester-mit-Ätzmaterialmischverfahren, mit den Schritten:
Polyester, bevorzugt PET, wird zur Verfügung gestellt,
das Polyester wird getrocknet,
das getrocknete Polyester wird mit dem Ätzmaterial gemischt, und
das mit dem Ätzmaterial gemischte Polyester wird in mehreren, in Abhängigkeit von einem Reaktionsverlauf der Reaktion zwischen PET und Ätzmaterial definierten, Temperatur-Stufen (4a, 4b, 4c) erhitzt,
wobei das Polyester in der ersten Stufe (4a), auf eine Temperatur zwischen 95°C und 120°C in der zweiten Stufe (4b) auf eine Temperatur zwischen 110°C und 130°C und in der dritten Stufe (4c) auf eine Temperatur zwischen 120°C und 140°C erhitzt wird,
mit einem Reaktor mit einer Doppelwellen-Mischschnecke (14) zur Durchführung des Erhitzens und des Mischens des Gemisches aus Polyester und Ätzmaterial, ineinander kämmenden Schneckenwellen (10, 12) für die Doppelwellen-Mischschnecke (14), und einem Sägezahnprofil (8) für die Schneckenwellen (10, 12) der Mischschnecke (14).

2. Verfahren nach Anspruch 1,
wobei das Polyester in der ersten Stufe (4a) für etwa 10 Minuten, in der zweiten Stufe (4b) für etwa 10 Minuten und in der dritten Stufe (4c) für etwa 10 Minuten erhitzt wird.

3. Verfahren nach einem der vorstehenden Ansprüche,
wobei das Polyester in der ersten Stufe (4a) auf etwa 110°C, in der zweiten Stufe (4b) auf etwa 120°C und in der dritten Stufe (4c) auf etwa 130°C erhitzt wird.

4. Verfahren nach einem der vorstehenden Ansprüche,
wobei das Polyester vor dem Erhitzen, bevorzugt auf eine Flockengröße von etwa 0,005 m bis etwa 0,01 m, gemahlen wird.

5. Verfahren nach einem der vorstehenden Ansprüche,
wobei das Polyester in einem Reaktor (2) erhitzt wird, welcher Reaktor (2), bevorzugt vor dem Zugeben des Polyesters, bevorzugt auf eine Temperatur zwischen 95°C und 165°C, weiter bevorzugt auf eine Temperatur zwischen 100°C und 130°C. vorgeheizt wird.

6. Verfahren nach einem der vorstehenden Ansprüche,
wobei die Zeit zwischen Beginn und Ende des Erhitzens des Polyesters zwischen 5 und 45 Minuten, bevorzugt zwischen 10 und 30 Minuten, weiter bevorzugt zwischen 10 und 15 Minuten, bevorzugt bei im Wesentlichen gleichbleibender Strömungsgeschwindigkeit des Polyesters, beträgt.

7. Verfahren nach einem der vorstehenden Ansprüche,
wobei das Polyester solange in dem Schritt des Erhitzens verbleibt bis die Restfeuchte kleiner 3 %, bevorzugt kleiner 2 %, weiter bevorzugt kleiner 1,6 %, beträgt.

8. Verfahren nach einem der vorstehenden Ansprüche,
wobei das Polyester solange in dem Schritt des Erhitzens verbleibt bis mehr als 95 %, bevorzugt mehr als 98 %, weiter bevorzugt mehr als 99 %, des, bevorzugt durch Phenolphthalein-Titration bestimmten freien. Ätzmaterials verbraucht ist.

9. Verfahren nach einem der vorstehenden Ansprüche,
wobei das Erhitzen des Polyesters in einem Reaktor (2) mit einem Durchsatz von mindestens 2000 kg/h, bevorzugt mindestens 2500 kg/h, durchgeführt wird.

10. Verfahren nach einem der vorstehenden Ansprüche,
wobei in den jeweiligen Stufen (4a, 4b, 4c) eine homogene Temperaturverteilung der Temperatur in für die jeweiligen Stufen (4a, 4b, 4c) vorgesehenen Zonen (4a, 4b, 4c) eines zur Durchführung des Verfahrens verwendeten Reaktors (2) eingestellt wird.

11. Verfahren nach einem der vorstehenden Ansprüche,
wobei als ein Reaktor (2) für die Durchführung des Erhitzens und des Mischens ein Doppelwellen-Mischschnecken-Reaktor (2) verwendet wird.

12. Verfahren nach Anspruch 11,
wobei durch die Verwendung eines Sägezahnprofils (8) für die, bevorzugt mit einer Schneckengangsteigung von etwa 100 mm versehenen, weiter ineinander kämmenden, Schneckenwellen (10, 12) der Mischschnecke (14) des Doppelwellen-Mischschnecken-Reaktors (2) die dem Polyester zugewandte Innenwandung (16) des Doppelwellen-Mischschnecken-Reaktors (2) von Anhaftungen des Polyesters im Wesentlichen freigehalten wird.

13. Verwendung eines Reaktors (2) für die Durchführung eines Polyester-mit-Ätzmaterialmischverfahrens nach einem der vorstehenden Ansprüche, **gekennzeichnet durch** eine Doppelwellen-Mischschnecke (14) zur Durchführung des Erhitzens und des Mischens des Gemisches aus Polyester und Ätzmaterial, **durch** ineinander kämmende Schneckenwellen (10, 12) für die Doppelwellen-Mischschnecke (14), und **durch** ein Sägezahnprofil (8) für die, bevorzugt mit einer Schneckengangsteigung von etwa 100 mm versehenen, Schneckenwellen (10, 12) der Mischschnecke (14).

## Claims

1. Process for mixing polyester with caustic material, with the following steps:
polyester, preferably PET, is made available,
the polyester is dried,
the dried polyester is mixed with the caustic material, and
the polyester mixed with the caustic material is heated in several temperature stages (4a, 4b, 4c) defined as a function of a course of the reaction of the reaction between PET and caustic material,
wherein in the first stage (4a) the polyester is heated to a temperature between 95 °C and 120 °C, in the second stage (4b) to a temperature between 110 °C and 130 °C, and in the third stage (4c) to a temperature between 120 °C and 140 °C,
with a reactor with a twin-shaft mixing screw (14) for carrying out the heating and the mixing of the mixture of polyester and caustic material, with intermeshing screw shafts (10, 12) for the twin-shaft mixing screw (14), and with a sawtooth profile (8) for the screw shafts (10, 12) of the mixing screw (14).

2. Process according to Claim 1,
wherein in the first stage (4a) the polyester is heated for about 10 minutes, in the second stage (4b) for about 10 minutes, and in the third stage (4c) for about 10 minutes.

3. Process according to one of the preceding claims,
wherein in the first stage (4a) the polyester is heated to about 110 °C, in the second stage (4b) to about 120 °C, and in the third stage (4c) to about 130 °C.

4. Process according to one of the preceding claims, wherein, prior to heating, the polyester is ground preferably to a flake size from about 0.005 m to about 0.01 m.

5. Process according to one of the preceding claims, wherein the polyester is heated in a reactor (2), said reactor (2) being preheated, preferably before the addition of the polyester, preferably to a temperature between 95 °C and 165 °C, more preferably to a temperature between 100 °C and 130 °C.

6. Process according to one of the preceding claims, wherein the time between the start and the end of the heating of the polyester amounts to between 5 minutes and 45 minutes, preferably between 10 minutes and 30 minutes, more preferably between 10 minutes and 15 minutes, preferably at a substantially constant rate of flow of the polyester.

7. Process according to one of the preceding claims, wherein the polyester remains within the heating step for such time until the residual moisture amounts to less than 3 %, preferably less than 2 %, more preferably less than 1.6 %.

8. Process according to one of the preceding claims, wherein the polyester remains within the heating step for such time until more than 95 %, preferably more than 98 %, more preferably more than 99 %, of the free caustic material, preferably determined by phenolphthalein titration, has been consumed.

9. Process according to one of the preceding claims,
wherein the heating of the polyester is carried out in a reactor (2) with a throughput of at least 2000 kg/h, preferably at least 2500 kg/h.

10. Process according to one of the preceding claims,
wherein in the respective stages (4a, 4b, 4c) a homogeneous temperature distribution of the temperature is set in zones (4a, 4b, 4c), provided for the respective stages (4a, 4b, 4c), of a reactor (2) which is used for carrying out the process.

11. Process according to one of the preceding claims,
wherein a twin-shaft mixing-screw reactor (2) is used as a reactor (2) for the implementation of the heating and of the mixing.

12. Process according to Claim 11,
wherein through the use of a sawtooth profile (8) for the intermeshing screw shafts (10, 12) of the mixing screw (14) of the twin-shaft mixing-screw reactor (2), which are preferably provided with a screw pitch of about 100 mm, the inner wall (16) of the twin-shaft mixing-screw reactor (2) facing towards the polyester is kept substantially free from adhesions of the polyester.

13. Use of a reactor (2) for the implementation of a process for mixing polyester with caustic material according to one of the preceding claims, **characterised by** a twin-shaft mixing screw (14) for carrying out the heating and the mixing of the mixture of polyester and caustic material, by intermeshing screw shafts (10, 12) for the twin-shaft mixing screw (14), and by a sawtooth profile (8) for the screw shafts (10, 12) of the mixing screw (14), which are preferably provided with a screw pitch of about 100 mm.

## Revendications

1. Procédé de mélange de polyester et de matière corrosive comprenant les étapes suivantes :
le polyester, de préférence le PET, est mis à disposition,
le polyester est séché,
le polyester séché est mélangé à la matière corrosive, et
le polyester mélangé à la matière corrosive est chauffé en plusieurs paliers de températures (4a, 4b, 4c) définis selon l'évolution réactionnelle de la réaction entre le PET et la matière corrosive,
le polyester étant chauffé à une température entre 95° C et 120° C dans le premier palier (4a), à une température entre 110° C et 130° C dans le deuxième palier (4b) et à une température entre 120° C et 140° C dans le troisième palier (4c),
avec un réacteur présentant une vis de mélange à double axe (14) pour exécuter le chauffage et le mélangeage du mélange de polyester et de la matière corrosive, des axes de vis (10, 12) qui s'engrènent l'un avec l'autre pour la vis de mélange à double axe (14), et un profil en dents de scie (8) pour les axes de vis (10, 12) de la vis de mélange (14).

2. Procédé selon la revendication 1,
dans lequel le polyester est chauffé pendant environ 10 minutes dans le premier palier (4a), pendant environ 10 minutes dans le deuxième palier (4b), et pendant environ 10 minutes dans le troisième palier (4c).

3. Procédé selon l'une des revendications précédentes,
dans lequel le polyester est chauffé à environ 110° C dans le premier palier (4a), à environ 120° C dans le deuxième palier (4b) et à environ 130° C dans le troisième palier (4c).

4. Procédé selon l'une des revendications précédentes,
dans lequel le polyester est broyé avant le chauffage, de préférence à une taille de flocons d'environ 0,005 m à environ 0,01 m.

5. Procédé selon l'une des revendications précédentes,
dans lequel le polyester est chauffé dans un réacteur (2), ledit réacteur (2) étant préchauffé de préférence avant l'addition du polyester, préférentiellement à une température comprise entre 95° C et 165° C, et de manière encore préférée, à une température comprise entre 100° C et 130° C.

6. Procédé selon l'une des revendications précédentes,
dans lequel le temps entre le début et la fin du chauffage du polyester se situe entre 5 et 45 minutes, de préférence entre 10 et 30 minutes, de manière encore préférée entre 10 et 15 minutes, de préférence à une vitesse d'écoulement substantiellement constante du polyester.

7. Procédé selon l'une des revendications précédentes,
dans lequel le polyester reste à l'étape de chauffage tant que l'humidité résiduelle n'est pas inférieure à 3 %, préférentiellement inférieure à 2 %, et de manière encore préférée inférieure à 1,6 %.

8. Procédé selon l'une des revendications précédentes,
dans lequel le polyester reste à l'étape de chauffage jusqu'à ce que plus de 95 %, préférentiellement plus de 98 %, et de manière encore préférée plus de 99 %, de la matière corrosive libre, déterminée de préférence par titrage de phénophtaléine, soient consommés.

9. Procédé selon l'une des revendications précédentes,
dans lequel le chauffage du polyester s'effectue dans un réacteur (2) à une allure d'au moins 2000 kg/h, de préférence d'au moins 2500 kg/h.

10. Procédé selon l'une des revendications précédentes,
dans lequel à chaque palier respectif (4a, 4b, c) une répartition homogène de la température est réglée, dans des zones (4a, 4b, 4c) prévues pour les paliers respectifs (4a, 4b, 4c) d'un réacteur (2) utilisé pour la réalisation du procédé.

11. Procédé selon l'une des revendications précédentes,
dans lequel on utilise comme réacteur (2) pour la réalisation du chauffage et du mélangeage, un réacteur à vis de mélange à double axe (2).

12. Procédé selon la revendication 11,
dans lequel, par l'utilisation d'un profil en dents de scie (8) pour les axes de vis (10, 12), dotés de préférence d'une augmentation de pas de vis d'environ 100 mm et s'engrénant l'un avec l'autre, de la vis de mélange (14) du réacteur à vis de mélange à double axe (2), la paroi interne (16) orientée vers le polyester du réacteur à vis de mélange à double axe (2) est substantiellement libérée des adhérences du polyester.

13. Utilisation d'un réacteur (2) pour la réalisation d'un procédé de mélange de polyester avec de la matière corrosive selon l'une des revendications précédentes,
**caractérisée par** une vis de mélange à double axe (14) pour la réalisation du chauffage et du mélangeage du mélange de polyester et de la matière corrosive, par des axes de vis (10, 12) s'engrénant l'un avec l'autre pour la vis de mélange à double axe (14), et par un profil en dents de scie (8) pour les axes de mélange (10, 12) de la vis de mélange (14), dotés de préférence d'une augmentation du pas de vis d'environ 100 mm.
